(19) Europäisches Patentamt
European Patent Office
Office européen des brevets

(11) Publication number: 0 422 907 A2

(12) **EUROPEAN PATENT APPLICATION**

(21) Application number: 90311072.4

(22) Date of filing: 10.10.90

(51) Int. Cl.[5]: C09B 67/22, C09D 11/00, //C09B47/16,C09B47/26

(30) Priority: 13.10.89 JP 267520/89

(43) Date of publication of application: 17.04.91 Bulletin 91/16

(84) Designated Contracting States: DE FR GB

(71) Applicant: TOYO INK MANUFACTURING CO., LTD.
No. 3-13, Kyobashi 2-chome Chuo-ku
Tokyo(JP)

(72) Inventor: Muramatsu,Yoshio, c/o Tokyo Ink Manufac. Co., Ltd.
3-13, Kyobashi 2-chome
Chuo-ku, Tokyo(JP)
Inventor: Shirao, Masami, c/o Tokyo Ink Manuf. Co., Ltd.
3-13, Kyobashi 2-chome
Chuo-ku, Tokyo(JP)

(74) Representative: Myerscough, Philip Boyd et al
J.A.Kemp & Co. 14, South Square Gray's Inn
London, WC1R 5EU(GB)

# (54) Copper phthalocyanine pigment composition and pigment composition dispersion containing same.

(57) A copper phthalocyanine pigment composition comprising a copper phthalocyanine obtainable by dry-milling a crude copper phthalocyanine in the absence of any milling aid and 1 to 20% by weight, based on the copper phthalocyanine, of a phthalocyanine derivative of formula [I] or [II]:

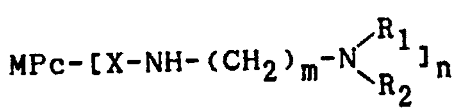
[I]

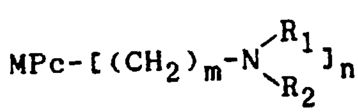
[II]

wherein Pc is a phthalocyanine residue, M is a hydrogen atom or a metal selected from Al, Fe, Co, Ni, Cu and Zn, X is $-SO_2-$, $-CH_2NHCOCH_2-$ or $-CH_2-$, and $R_1$ and $R_2$ independently represent a hydrogen atom or an alkyl group having 1 to 5 carbon atoms or $R_1$ and $R_2$ together with the nitrogen atom to which they are attached form a 5- or 6-membered heterocyclic ring which may contain a further nitrogen atom or an oxygen atom, m is an integer of 1 to 5 and n is an integer of 1 to 4.

EP 0 422 907 A2

# COPPER PHTHALOCYANINE PIGMENT COMPOSITION AND PIGMENT COMPOSITION DISPERSION CONTAINING SAME

## Field of the Invention

This invention relates to a copper phthalocyanine pigment composition and a pigment composition dispersion containing same. More specifically, it relates to a copper phthalocyanine composition formed by dry-milling a crude copper phthalocyanine and a copper phthalocyanine derivative in the absence of any milling aid or by dry-milling a crude copper phthalocyanine in the absence of any milling aid and then incorporating a copper phthalocyanine derivative, and a pigment composition dispersion containing the copper phthalocyanine composition.

## Description of the Prior Arts

A finely milled copper phthalocyanine pigment has a excellent color tone, high tinting strength and excellent other functions such as high weatherability and heat resistance. Therefore, it is widely used in a large amount in coloring material industry.

A crude copper phthalocyanine is usually produced by reacting phthalic anhydride or a derivative thereof, urea and a copper source, or phthalonitrile or a derivative thereof and a copper source in an organic solvent such as alkylbenzene, trichlorobenzene or nitrobenzene in the presence or absence of ammonium molybdate or titanium tetrachloride under atmospheric pressure or elevated pressure. However, the resultant phthalocyanine molecules undergo crystal growth one after another in the solvent, and there is only obtained a copper phthalocyanine having a coarse acicular crystal form having a major axis of about 10 to about 200 $\mu$m. Therefore, such a copper phthalocyanine has little or no value as a pigment to color an ink, a coating composition, plastics, etc.

For this reason, a crude copper phthalocyanine is required to be milled to form particles having a high value in color, such as particles having a diameter of about 0.01 to about 0.5 $\mu$m. In order to obtain a finely milled $\alpha$-form pigment, an acid pasting method and an acid slurry method are known. In the acid pasting method, a crude copper phthalocyanine is treated by dissolving it in a large amount of concentrated sulfuric acid. In the acid slurry method, a sulfuric acid salt of a crude copper phthalocyanine is formed by using a large amount of sulfuric acid having a concentration insufficient to dissolve a pigment. However, these methods have a defect in that the use of a large amount of sulfuric acid is undesirable in view of waste water disposal.

Further, a finely milled $\beta$-form phthalocyanine is produced by a so-called dry salt milling method in which a crude copper phthalocyanine is dry-milled together with a milling aid such as anhydrous ferrocyanated sodium or anhydrous barium chloride at a high temperature between 100 °C and 150 °C for a long period of time, by a so-called solvent salt milling method in which a crude copper phthalocyanine is charged into a double arm dispersing mixer together with a milling aid formed of water-soluble inorganic salt such as sodium chloride and an organic liquid such as alcohol, polyol or amine and wet-milled, or by a dry milling method in which a crude copper phthalocyanine is dry-milled in the absence of any milling aid and an organic liquid and then treating the dry-milled copper phthalocyanine with an organic solvent, etc. However, these methods require multiple step processing or a large amount of energy.

Further, $\alpha$-form and $\beta$-form phthalocyanines obtained according to the above methods have a problem that a large amount of energy is also required in order to disperse aggregated particles thereof in a vehicle when used in an ink, paint, etc. In order to overcome these problems, U.S. Patent No. 3,349,150 discloses that a crude copper phthalocyanine is dry-milled and directly suspended in a solvent or a resin solution which can be used as an ink, paint, or the like, whereby a pigment paste can be obtained without preliminarily changing a pigment form. In this method, a dry-milled copper phthalocyanine which is a mixture, as a crystal form, of an $\alpha$-form with a $\beta$-form is added to a varnish containing a crystallizing agent to form a pigment paste having a suitable particle diameter under transformation into a $\beta$-form and crystal growth. However, this method has defects in that it is difficult to obtain, under control, a particle diameter suitable for use and the resultant copper phthalocyanine has low tinting strength. U.S. Patent 4,448,607 discloses a copper phthalocyanine pigment composition formed by dry-milling a crude copper phthalocyanine together with aphthalimidemethylphthalocyanine derivative in order to effectively utilize the above method. However, this pigment composition is poor in suitability in use, such as dispersibility, tinting strength, clearness, gloss and stability with time, and it has been desired to improve these properties.

## Summary of the Invention

It is an object of this invention to provide a copper phthalocyanine pigment composition which requires no waste water disposal after a pigment is formed, and a pigment composition dispersion containing same.

It is another object of this invention to provide a copper phthalocyanine pigment composition which does not require a large amount of energy when a pigment is formed, and a pigment composition dispersion containing same.

It is further another object of this invention to provide copper phthalocyanine pigment composition dispersion having excellent dispersibility, tinting strength, clearness, gloss and stability with time in a nonaqueous vehicle such as a coating composition, a printing ink, and the like.

According to this invention, there is provided a copper phthalocyanine pigment composition comprising a copper phthalocyanine formed by dry-milling a crude copper phthalocyanine in the absence of any milling aid and 1 to 20 % by weight, based on the copper phthalocyanine, of a phthalocyanine derivative of the following formula [I] or [II]:

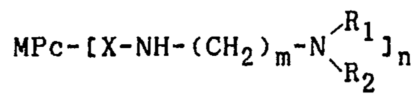 [I]

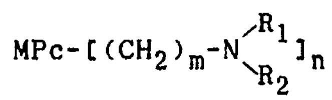 [II]

wherein Pc is a phthalocyanine residue, M is a hydrogen atom or a metal selected from Al, Fe, Co, Ni, Cu and Zn, X is $-SO_2-$, $-CH_2NHCOCH_2-$ or $-CH_2-$, $R_1$ and $R_2$ are independently a hydrogen atom or an alkyl group having 1 to 5 carbon atoms, provided that $R_1$ and $R_2$ may together form a 5-or 6-membered heterocyclic ring which may further contain a nitrogen or oxygen atom, m is an integer of 1 to 5, and n is an integer of 1 to 4.

Further, this invention provides a pigment composition dispersion formed by dispersing the above copper phthalocyanine composition in a nonaqueous vehicle.

The process for the production of a crude copper phthalocyanine is not specially limited. For example, a crude copper phthalocyanine is produced as follows. Phthalic anhydride or a derivative thereof, urea and a copper source, or phthalonitrile or a derivative thereof and a copper source are reacted with each other in an organic solvent in the presence or absence of a catalyst at 120 to 270° C, preferably 170 to 230° C for 2 to 15 hours, preferably 3 to 7 hours under atmospheric pressure or elevated pressure. In addition, a low-chlorination copper phthalocyanine may be used as a crude copper phthalocyanine.

The phthalocyanine derivative of this invention has the following formula [I] or [II]:

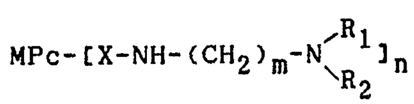 [I]

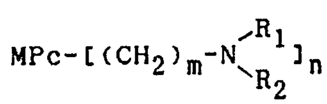 [II]

wherein Pc is a phthalocyanine residue, M is a hydrogen atom or a metal selected from Al, Fe, Co, Ni, Cu and Zn, X is $-SO_2-$, $-CH_2NHCOCH_2-$ or $-CH_2-$, $R_1$ and $R_2$ are independently a hydrogen atom or an alkyl group having 1 to 5 carbon atoms, provided that $R_1$ and $R_2$ may together form a 5-or 6-membered heterocyclic ring which may further contain a nitrogen or oxygen atom, m is an integer of 1 to 5, and n is an integer of 1 to 4.

Specific examples of the copper phthalocyanine derivative used in this invention are as follows.

$CuPc\text{-}[SO_2NH(CH_2)_3N(C_2H_5)_2]_2$

$CuPc\text{-}[SO_2NH(CH_2)_3N(CH_3)_2]_2$

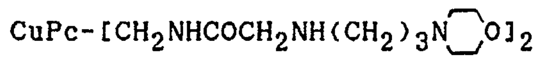

$CuPc-[CH_2NHCOCH_2NH(CH_2)_3N(C_4H_9)_2]_3$

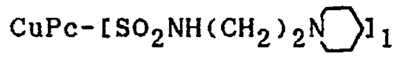

$CuPc-[CH_2NH(CH_2)_5N(C_2H_5)_2]_2$
$CuPc-[CH_2NH(CH_2)_3N(C_2H_5)_2]_3$
$CuPc-[CH_2NH(CH_2)_4(CH_3)_2]_3$
$CuPc-[CH_2N(C_2H_5)_2]_2$
$CuPc-[CH_2N(C_2H_5)_2]_4$
$CuPc-[CH_2N(C_4H_9)_2]_2$

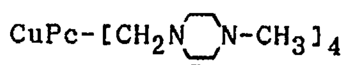

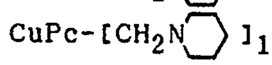

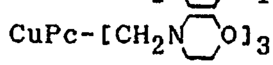

The amount of the phthalocyanine derivative based on the copper phthalocyanine is 1 to 20 % by weight, preferably 2 to 15 % by weight, more preferably 3 to 12 % by weight. When this amount is less than 1 % by weight, the resultant pigment dispersion is poor in tinting strength, clearness, gloss and storage stability. The amount over 20 % by weight is not economical.

The phthalocyanine derivative may be incorporated into a crude copper phthalocyanine before or after dry-milling, and the time for the incorporation is not specially limited. The dry milling is carried out by means of, e.g. a ball mill, a vibration mill, an attriter, or the like. The milling temperature may be freely set at the range of from 20 to 130 °C. As a result of dry-milling, a crude copper phthalocyanine which inherently has a $\beta$-crystal form includes an $\alpha$-crystal form. In this invention, the content of the $\alpha$-form crystal in the milled copper phthalocyanine is 10 to 100 %, preferably 20 to 90 %, more preferably 30 to 80 %.

The pigment composition dispersion of this invention is obtained by incorporating the copper phthalocyanine pigment composition of this invention into a vehicle for a printing ink such as a lithographic ink, a gravure ink, etc., or a vehicle for a coating composition. Particularly preferred as a vehicle is a nonaqueous vehicle containing an aromatic organic solvent such as toluene, xylene, or the like.

A coating composition comprises 0.1 to 15 % by weight of the copper phthalocyanine pigment composition, 99.9 to 55 % by weight of a vehicle for a coating composition and 0 to 30 % by weight of other additive and an extender pigment. The vehicle for a coating composition comprises 80 to 20 % by weight of a mixture of resins selected from acrylic, alkyd, epoxy, polyurethane, polyester, melamine and other resins, and 60 to 10 % by weight of a solvent such as a hydrocarbon, an alcohol, a ketone, an ether alcohol, ether, ester, or the like.

A gravure ink comprises 3 to 20 % by weight of the copper phthalocyanine pigment composition of this invention, 97 to 60 % by weight of a vehicle for a gravure ink and 0 to 20 % by weight of other additive and an extender pigment. The vehicle for a gravure ink comprises 10 to 50 % by weight of a resin mixture of components selected from lime rosin, rosin ester, a maleic acid resin, a polyamide resin, a vinyl resin, nitrocellulose, an ethylene-vinyl acetate copolymer resin, a urethane resin, a polyester resin, an alkyd resin, etc., and 30 to 80 % by weight of a solvent such as a hydrocarbon, an alcohol, a ketone, an ether alcohol, an ether, an ester, or the like.

This invention will be more specifically explained by reference to Examples, which however shall not limit this invention. In Examples, "part" stands for "part by weight" and "%" for "% by weight".

## Example 1

7 Parts of a copper phthalocyanine derivative of the following formula was added to 93 parts of a crude chloro-free copper phthalocyanine, and these components were dry-milled with an attriter at 55 °C for 1 hour. Analysis of the resultant, dry-milled mixture by X-ray diffractometry showed that it contained 65 % of an $\alpha$-form copper phthalocyanine.
$CuPc-[SO_2NH(CH_2)_3N(C_2H_5)_2]_2$

Example 2

100 Parts of a crude chloro-free copper phthalocyanine was dry-milled with an attriter at 55 °C for 1 hour. Analysis of the resultant, dry-milled product by X-ray diffractometry showed that it was a mixture containing 66 % of an α-form copper phthalocyanine. 93 Parts of this dry-milled mixture and 7 parts of the same copper phthalocyanine derivative as that in Example 1 were mixed with each other.

Comparative Example 1

100 Parts of a crude chloro-free copper phthalocyanine was dry-milled with an attriter at 55 °C for 1 hour. Analysis of the resultant, dry-milled product by X-ray diffractometry showed that it was a mixture containing 65 % of an α-form copper phthalocyanine.

Comparative Example 2

7 Parts of phthalimidemethyl copper phthalocyanine derivative was added to 93 parts of a crude chloro-free copper phthalocyanine, and these components were dry-milled with an attriter at 55 °C for 1 hour. Analysis of the resultant, dry-milled mixture by X-ray diffractometry showed that it contained 65 % of an α-form copper phthalocyanine.

Examples 3-6

Example 1 was repeated except that the amount of the derivative and the milling conditions were changed as shown in Table 1.

Table 1

| Example | Composition (%) | | Milling Conditions | | Product |
|---|---|---|---|---|---|
| | Crude CuPc | CuPc derivative | Time (hour) | Temperature (°C) | α-form content (%) |
| 3 | 88 | 12 | 1.0 | 55 | 67 |
| 4 | 93 | 7 | 1.5 | 55 | 78 |
| 5 | 93 | 7 | 1.0 | 80 | 60 |
| 6 | 93 | 7 | 1.0 | 40 | 72 |

Examples 7-9

Example 1 was repeated except that the copper phthalocyanine derivative was changed as follows.

Example 7: CuPc-$[CH_2NHCOCH_2NH(CH_2)_3N(C_4H_9)_2]_3$

Example 8: CuPc-$[CH_2NH(CH_2)_3N(C_2H_5)_2]_3$

Example 9: CuPc-$[CH_2N(C_2H_5)_2]_2$

(Method of Evaluation)

In order to evaluate effects of pigments of this invention, coating compositions and gravure inks were prepared as per the following formulation.

| Formulation 1 (oil coating composition): | |
|---|---|
| Pigment | 7 parts |
| Alkyd resin varnish | 76 parts |
| Melamine resin varnish | 28 parts |
| Thinner | 12 parts |
| Formulation 2 (gravure ink): | |
| Pigment: | 10 parts |
| Lime rosin varnish | 80 parts |
| Thinner | 10 parts |

The evaluation was made in the following manner.

(1) Fluidity

The resultant pigment dispersion was measured for a viscosity with a Brookfield type viscometer at 6 and 60 rpm.

(2) Hue and gloss

The resultant oil coating composition was adjusted with a thinner to show 20 seconds with a No. 4 Ford cup, sprayed onto a tin plate with a spray gun and baked to form a coated plate. The gravure ink was applied to coat paper with a bar coater, and evaluated on hue by the eyes or measured for gloss at an incident angle of 60 degrees with a glossmeter. The results are shown in Tables 2 and 3.

(3) Tinting strength

The oil coating composition was mixed with a white coating composition, and the mixture was applied to art paper and baked. The gravure ink was mixed with a white ink, and the mixture was applied to coat paper and evaluated by the eyes. The tinting strength means strength of an organic pigment to color a white pigment. The results are shown in Tables 2 and 3, in which a value (%) for the tinting strength shows a difference from tinting strength of a standard product. That is, tinting strength, e.g. -10% means that it is required to incorporate an additional amount (10 %) of the organic pigment into a coating composition in order to obtain tinting strength equivalent to that of the standard product.

(4) Storage stability (gravure ink)

An ink which had been allowed to stand at 50°C for 5 days was mixed with a white ink. A newly prepared ink was also mixed with a white ink. These mixtures were respectively applied to coat paper with a bar coater, and stabilities of these inks with time were evaluated on the basis of a difference in tinting strength. The results are shown in Tables 2 and 3, in which a value (%) for the storage stability means a difference from tinting strength of the ink prepared just before use. That is, storage stability, e.g. -15 % means that it is required to incorporate an additional amount (15 %) of the organic pigment into a gravure ink in order to obtain tinting strength equivalent to that of the ink prepared just before use.

Table 2 shows the evaluation results of oil coating compositions and Table 3 shows the evaluation results of gravure inks. These Tables show that pigments according to this invention have excellent performances over those of Comparative Examples.

Table 2

| oil coating compositions | | | | | |
|---|---|---|---|---|---|
| | Viscosity (cps) 1) | Hue | Clearness | Tinting strength (%) | Gloss (%) |
| Ex.1 | 460/455 | standard | standard | standard | 85 |
| Ex.2 | 480/468 | equivalent | equivalent | -2 | 82 |
| CEx.1 | 8200/1660 | much greener | much dirtier | -20 | 73 |
| CEx.2 | 3200/900 | greener | poor | -8 | 77 |
| Ex.3 | 370/365 | equivalent | equivalent | equivalent | 85 |
| Ex.4 | 490/485 | slightly redder | slightly cleaner | +5 | 88 |
| Ex.5 | 450/445 | slightly greener | equivalent | -2 | 84 |
| Ex.6 | 470/465 | equivalent | equivalent | equivalent | 85 |
| Ex.7 | 520/510 | equivalent | equivalent | -3 | 81 |
| Ex.8 | 510/495 | equivalent | equivalent | -3 | 82 |
| Ex.9 | 500/490 | equivalent | equivalent | -2 | 83 |
| Ex. = Example, CEx. = Comparative Example | | | | | |

1) Brookfield type viscometer (value at 6 rpm/value at 60 rpm)

Table 3

| gravure inks | | | | | | |
|---|---|---|---|---|---|---|
| | Viscosity (cps) 1) | Hue | Clearness | Tinting strength (%) | Gloss (%) | Storage stability (%) 2) |
| Ex.1 | 185/175 | standard | standard | standard | 70 | -3 |
| Ex.2 | 195/185 | equivalent | equivalent | -2 | 69 | -2 |
| CEx.1 | 400/320 | much greener | much dirtier | -12 | 62 | -15 |
| CEx.2 | 300/720 | greener | poor | -5 | 65 | -12 |
| Ex.3 | 160/150 | equivalent | equivalent | -1 | 69 | no change |
| Ex.4 | 198/185 | slightly redder | slightly cleaner | +4 | 74 | -5 |
| Ex.5 | 175/165 | slightly greener | equivalent | equivalent | 70 | -3 |
| Ex.6 | 188/178 | equivalent | equivalent | equivalent | 70 | -4 |
| Ex.7 | 198/190 | equivalent | equivalent | -1 | 69 | -3 |
| Ex.8 | 195/185 | equivalent | equivalent | equivalent | 69 | -4 |
| Ex.9 | 202/192 | equivalent | equivalent | equivalent | 69 | -3 |
| Ex. = Example, CEx. = Comparative Example | | | | | | |

1) Brookfield type viscometer (value at 6 rpm/value at 60 rpm)
2) Change in tinting strength with time.

**Claims**

1. A copper phthalocyanine pigment composition comprising a copper phthalocyanine obtainable by dry-milling a crude copper phthalocyanine in the absence of any milling aid and 1 to 20% by weight, based on the copper phthalocyanine, of a phthalocyanine derivative of formula [I] or [II]:

$$MPc\text{-}[X\text{-}NH\text{-}(CH_2)_m\text{-}N\begin{matrix}R_1\\R_2\end{matrix}]_n \qquad [I]$$

$$MPc\text{-}[(CH_2)_m\text{-}N\begin{matrix}R_1\\R_2\end{matrix}]_n \qquad [II]$$

wherein Pc is a phthalocyanine residue, M is a hydrogen atom or a metal selected from Al, Fe, Co, Ni, Cu and Zn, X is $-SO_2-$, $-CH_2NHCOCH_2-$ or $-CH_2-$, and $R_1$ and $R_2$ independently represent a hydrogen atom or an alkyl group having 1 to 5 carbon atoms or $R_1$ and $R_2$ together with the nitrogen atom to which they are attached form a 5- or 6-membered heterocyclic ring which may contain a further nitrogen atom or an oxygen atom, m is an integer of 1 to 5 and n is an integer of 1 to 4.

2. A composition according to claim 1, wherein the copper phthalocyanine obtainable by dry-milling a crude copper phthalocyanine contains 10 to 100% by weight of α-form crystals.

3. A composition according to claim 1 or 2, which comprises 2 to 15% by weight of the phthalocyanine derivative.

4. A composition according to claim 1, 2 or 3, which is obtainable by dry-milling a crude copper phthalocyanine in the presence of the phthalocyanine derivative.

5. A composition according to any one of the preceding claims wherein the symbol M in formula [I] or [II] is copper.

6. A composition according to claim 1, 2 or 3, which is obtainable by incorporating the phthalocyanine derivative after the crude copper phthalocyanine is dry-milled.

7. A pigment dispersion composition formed by dispersing a composition as claimed in any one of the preceding claims in a nonaqueous vehicle.

8. A composition according to claim 6, wherein the nonaqueous vehicle contains an aromatic solvent.

9. A composition according to claim 6 or 7, wherein the nonaqueous vehicle is a vehicle for a printing ink or a coating composition.